# EUROPEAN PATENT SPECIFICATION

(11) **EP 1 031 738 B1**
(45) Date of publication and mention of the grant of the patent: **14.01.2004**
(21) Application number: 00103657.3
(22) Date of filing: 21.02.2000
(51) Int. Cl.: F16B 12/44, F16B 12/40, A47B 95/04

(54) **Cover platelet for joints**
Abdeckplättchen für Verbindungen
Plaquette de cache pour joints

(30) Priority: 23.02.1999 IT UD990040
(43) Date of publication of application: 30.08.2000
(73) Proprietor: Odorico, Angelo, 33050 Rivignano (Udine) (IT); Odorico, Marco, 33050 Rivignano (UD) (IT)
(72) Inventor: Odorico, Angelo, 33050 Rivignano (Udine) (IT); Odorico, Marco, 33050 Rivignano (UD) (IT)
(74) Representative: Petraz, Gilberto Luigi

(56) References cited:
- DE-A- 2 519 607
- GB-A- 2 049 863
- US-A- 3 016 590

## Description

This invention concerns a cover platelet for joints as set forth in the preamble of the main claim as already disclosed in DE-A-2519607.

To be more exact, the invention refers to a platelet used to cover the outer faces of joints used in assembling tubular elements which make up the frame of furniture such as tables, benches, sinks, shelves or suchlike.

The joints to which the invention refers may be either angular or linear.

### BACKGROUND OF THE INVENTION

The state of the art includes connecting joints for furniture frames comprising a main body and means to join together two or more tubular elements which constitute the legs or horizontal supports of tables, benches, desks, sinks or suchlike.

The joints may be either of the angular type or of the linear type, in the second case defining the connection between two or more tubular elements joined in succession.

One of the disadvantages, both functional and aesthetic, which businessmen working in this field find in the use of said joints is that the zones of discontinuity which are created in correspondence with the connection between the tubular elements and the main body of the joint, and also the outer faces of the main body, are all visible; thus there are fissures which are not only anti-aesthetic, but which also encourage the infiltration of dust, dirt, water etc.

various solutions have been proposed for this shortcoming, using plates or similar, of a shape mating with the joint, with one or more pins able to slot into corresponding holes on the outer faces of the main body of the joint.

These solutions however are not satisfactory, both because they do not allow to completely cover the discontinuous zones, and also because the attachment system is not completely reliable and, over time, may prove to be insufficient; moreover, they require complex and expensive working, particularly to achieve the pins on the covering plates.

DE-A-2519607 discloses a right-angled platelet comprising two elastic fins able to be coupled with a snap action with two mating protrusions formed in an angular element for furniture, and therefore it has not edges angled for clamping onto grooves formed in the external surface of the joint. Furthermore, this platelet does not constitute continuity of line with the elements of the furniture because its lateral edges rest externally on the surface of the elements creating a discontinuity in the furniture as seen from the outside.

US-A-3016590 discloses a decorative strip assembly consisting of a base strip sormonted by a cap assembly. This document, implicitly, discloses an element which protrudes from the external line of the furniture to which is applied to be clearly visible from outside; such strip assembly is not applied to a joint between two elements of a furniture to cover and hide the presence of the joint itself and to constitute continuity of line with the elements to which is applied.

GB-A-2049863 discloses a three-dimensional joint for furniture comprising a three-dimensional cladding cap. This cap is not in the form of a foil having a shape mating with the outer faces of the joint, and has not lateral edges angled in such a way so as to be able to be inserted into grooves made on the lateral surface of the main body of the joint in order to clamp itself upon the joint. This document discloses a cap having clipping projections which enter into clipping connection with the connector body of the joint, but these clipping connection are outside to the body of the joint, so that, in order to support the cap, it is needed that the heads of the securing bolts enter into mating recesses provided in the cap.

The present Applicants have devised and embodied this invention to solve all the shortcomings described above with an inexpensive, practical and extremely reliable solution, and also to obtain further advantages.

### SUMMARY OF THE INVENTION

The invention is set forth and characterized in the main claim, while the secondary claims describe other characteristics of the invention.

The purpose of the invention is to achieve a cover platelet for the outer faces of the main body of a joint connecting tubular elements in furniture, which will be practical, inexpensive, reliable, easy to make and assemble, and will hold securely over time.

The invention is applied preferentially on metal joints used to connect tubular elements made of metal, but its teaching can also be extended to the case of frames and structures made partly or entirely of other materials, such as for example plastic or suchlike.

The cover platelet according to the invention consists of a foil, flat or angular according to the shape of the joint to which it is applied; it has the lateral edges folded back at an angle to define attachment elements able to cooperate with mating grooves made laterally on the main body of the joint.

According to the preferential embodiment of the invention, the cover platelet has or cooperates with abutment means which define the lower end-of-travel position of the platelet with respect to the joint.

In this way, to assemble the platelet on the joint it is sufficient to slip on the platelet from above, inserting the folded edges of the platelet inside the grooves on the main body of the joint.

The platelet is then thrust towards the bottom as far as the lower end-of-travel position defined by the abutment means.

In a first embodiment, the abutment means consist of one or more fins made on the upper edge of the platelet and facing the inside, advantageously cooperating with mating hollows made in the upper face of the joint.

In another embodiment, the abutment means consist of at least a protrusion made in correspondence with the lower edge of the main body of the joint.

In a further embodiment, the abutment means consist of an interruption in the lower terminal part of at least one lateral edge of the platelet cooperating with a mating interruption in the relative groove on the main body of the joint.

With the platelet according to the invention we therefore obtain a cover element which ensures on the one hand a simple, rapid, durable and stable assembly, and on the other hand an efficient aesthetic and functional solution, since the fissures and discontinuities between the elements of the frame and the joint are covered and closed in an optimum manner.

### BRIEF DESCRIPTION OF THE DRAWINGS

These and other characteristics of the invention will become clear from the following description of some preferential forms of embodiment, given as a non-restrictive example, with reference to the attached drawings wherein:
- Fig. 1: shows a first type of cover platelet according to the invention in a condition detached from the joint;
- Fig. 2: shows the cover platelet from Fig. 1 when associated with the joint;
- Fig. 3: shows a second type of cover platelet according to the invention;
- Figs. 4a and 4b: show two details of a variant of the cover platelet according to the invention.

### DETAILED DESCRIPTION OF PREFERRED EMBODIMENT

With reference to the attached drawings, number 10 denotes generally the cover platelet for joints 11 according to the invention.

The platelet 10 is used in association with joints 11 comprising a main body 15 and at least two insertion seatings (not visible in the drawings) in correspondence with which tubular elements 12 which make up the components of furniture frames are able to be connected.

The platelet 10 is able to be associated with the outer faces 15a of the main body 15 of the joints 11 to cover holes 13, fissures, attachment elements or other anti-aesthetic parts on the main body 15.

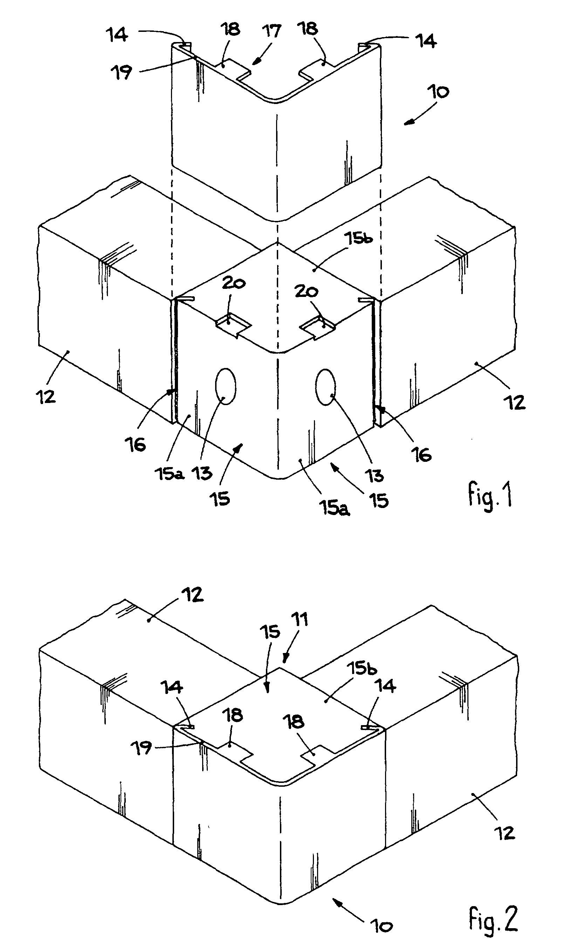

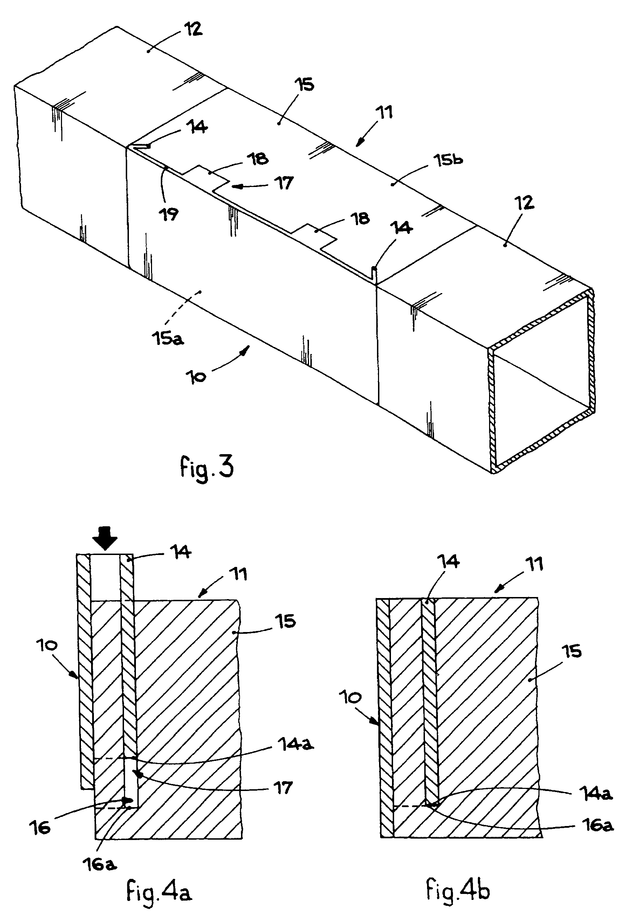

The joints 11 to which the platelet 10 can be applied may be either of the angular type, able to connect tubular elements 12 arranged at an angle (Figs. 1 and 2), or of the linear type, that is, able to connect tubular elements 12 in a line (Fig. 3).

The platelet 10 according to the invention consists of a thin foil, of a shape mating with the main body 15 of the joint 11 to which it has to be associated, and with the lateral edges 14 folded back at an acute angle.

The platelet 10 shown in Figs. 1 and 2 has a right-angle shape, as it has to cover the two outer faces 15a of the cubic main body 15 of an angular joint 11.

The platelet 10 shown in Fig. 3 is substantially flat, since it is able to cover the outer face 15a of the main body 15 of a linear joint 11.

The platelet 10 may however have different conformations, for example if the main body 15 is cylindrical or elliptic, or it may have a polygonal development if it must be able to cover several outer faces 15a of a polyhedral main body 15.

According to the invention, the lateral edges 14 of the platelet 10 are able to be inserted inside mating vertical grooves 16 made on the lateral edges of the main body 15.

In the embodiment shown here, the lateral edges 14 are inserted into the vertical grooves 16 from above, and the platelet 10 comprises, or cooperates with, abutment means 17 defining the lower end-of-travel position of the platelet 10 with respect to the joint 11.

In the embodiment shown in Figs. 1, 2 and 3, the abutment means 17 consist of horizontal fins 18 made in correspondence with the upper edge 19 of the platelet 10 and facing towards the inside thereof.

The horizontal fins 18 are able to couple with mating hollows 20 made on the upper face 15b of the main body 15, preventing the platelet 10 from going any lower with respect to the joint 11.

In the embodiment shown in Figs. 4a and 4b, the abutment means 17 are defined by a lower interruption in the lateral edges 14 of the platelet 10 and by a mating interruption in the lower terminal segment of the relative vertical grooves 16 of the main body 15.

In this embodiment, when the lateral edges 14 have been completely inserted, the lower profile 14a of the latter rests and abuts on the bottom 16a of the relative vertical grooves 16 (Fig. 4b), making it impossible for the platelet 10 to go any lower with respect to the joint 11.

According to a variant of the invention which is not shown here, the abutment means consist of a protruding lower edge of the main body 15 on which the platelet 10 is able to rest when the lateral edges 14 have been completely inserted inside the vertical grooves 16.

It is obvious however that modifications and additions may be made to the cover platelet 10 as described heretofore, but these shall remain within the field and scope of the invention.

For example, instead of the horizontal fins 18 a single edge may be provided, protruding towards the inside and extending for the entire development of the outer faces 15a of the main body 15.

## Claims

1. Cover platelet for joints (11) in furniture frames, said joint (11) comprising a main body (15) and connection means for tubular elements (12) of said furniture frames, said platelet being able to be associated with said joint (11) to cover the outer faces (15a) of said main body (15), the platelet being **characterized in that** it consists of a foil, of a shape mating with said outer faces (15a) of said joint (11), including lateral edges (14) folded back at an angle and able to be inserted into mating vertical grooves (16) made on the lateral surface of said main body (15) of said joint (11) so as to constitute continuity of line with said tubular elements (12) connected each other by said joint (11).

2. Platelet as in Claim 1, **characterized in that** said lateral edges (14) are able to be inserted from above inside said vertical grooves (16).

3. Platelet as in Claim 2, **characterized in that** it comprises abutment means (17) able to define the lower end-of-travel position with respect to the joint (11).

4. Platelet as in Claim 3, **characterized in that** said end-of-travel abutment means (17) comprise at least a fin (18) made in correspondence with the upper profile (19) of the platelet (10) and facing towards the inside thereof, able to rest on the upper face (15b) of the main body (15).

5. Platelet as in Claim 4, **characterized in that** said fin (18) is able to couple with a mating hollow on the upper face (15b) of the main body (15).

6. Platelet as in Claim 3, **characterized in that** said end-of-travel abutment means (17) are defined by a lower terminal interruption in at least one of the lateral edges (14) of the platelet (10) cooperating with a mating interruption in the relative vertical groove (16).

7. Platelet as in Claim 3, **characterized in that** said end-of-travel abutment means (17) are defined by at least a protruding lower edge of the main body (15) on which the lower edge of the platelet (10) is able to rest.

8. Platelet as in Claim 1, **characterized in that** it has a right-angle shape.

9. Platelet as in Claim 1, **characterized in that** it has a substantially flat shape.

## Patentansprüche

1. Abdeckplättchen für Verbinder (11) in Möbelrahmen, wobei der Verbinder (11) einen Hauptkörper (15) und Verbindungseinrichtungen für rohrförmige Elemente (12) der Möbelrahmen aufweist, wobei das Plättchen dem Verbinder (11) zugeordnet werden kann, um die Außenflächen (15a) des Hauptkörpers (15) abzudecken,
wobei das Plättchen **dadurch gekennzeichnet ist,**
**daß** es aus einer Folie besteht, deren Gestalt an die Außenflächen (15a) des Verbinders (11) angepaßt ist und die Seitenkanten (14) besitzt, die unter einem Winkel zurückgefaltet sind und in passende vertikale Nuten (16) eingesetzt werden können, die an der seitlichen Oberfläche des Hauptkörpers (15) des Verbinders (11) ausgebildet sind, um eine Linienkontinuität mit den rohrförmigen Elementen (12) zu bilden, die durch den Verbinder (11) miteinander verbunden sind.

2. Plättchen nach Anspruch 1,
**dadurch gekennzeichnet,**
**daß** die Seitenkanten (14) von oben innerhalb der vertikalen Nuten (16) eingesetzt werden können.

3. Plättchen nach Anspruch 2,
**dadurch gekennzeichnet,**
**daß** es eine Anschlageinrichtung (17) aufweist, die eine untere Bewegungsanschlagposition bezüglich des Verbinders (11) bilden kann.

4. Plättchen nach Anspruch 3,
**dadurch gekennzeichnet,**
**daß** die Bewegungsanschlageinrichtung (17) mindestens eine Rippe (18) aufweist, die in Entsprechung mit dem oberen Profil (19) des Plättchens (10) ausgebildet ist und zu der Innenseite hin gerichtet ist, so daß sie auf der Oberseite (15b) des Hauptkörpers (15) aufliegen kann.

5. Plättchen nach Anspruch 4,
**dadurch gekennzeichnet,**
**daß** die Rippe (18) mit einem passenden Hohlraum in der Oberseite (15b) des Hauptkörpers (15) gekoppelt werden kann.

6. Plättchen nach Anspruch 3,
**dadurch gekennzeichnet,**
**daß** die Bewegungsanschlageinrichtung (17) von einer unteren Endunterbrechung in mindestens einer der Seitenkanten (14) des Plättchens (10) gebildet ist, die mit einer passenden Unterbrechung in der relativen vertikalen Nut (16) zusammenwirkt.

7. Plättchen nach Anspruch 3,
**dadurch gekennzeichnet,**
**daß** die Bewegungsanschlageinrichtung (17) von mindestens einer vorstehenden Unterkante des Hauptkörpers (15) gebildet ist, an der die Unterkante des Plättchens (10) anliegen kann.

8. Plättchen nach Anspruch 1,
**dadurch gekennzeichnet,**
**daß** es eine rechtwinklige Gestalt besitzt.

9. Plättchen nach Anspruch 1,
**dadurch gekennzeichnet,**
**daß** es eine im wesentlichen flache Gestalt besitzt.

## Revendications

1. Plaquette de cache pour joints (11) dans les structures de meubles, ledit joint (11) comprenant un corps principal (15) et des moyens de liaison pour les éléments tubulaires (12) desdites structures de meubles, ladite plaquette pouvant être associée audit joint ( 11) pour couvrir les faces extérieures (15a) dudit corps principal (15), la plaquette étant **caractérisée en ce qu'**elle consiste en une feuille, d'une forme correspondant auxdites faces extérieures (15a) dudit joint (11), comprenant des bords latéraux (14) repliés au niveau d'un angle et pouvant être insérés dans des rainures verticales correspondantes (16) réalisées sur la surface latérale dudit corps principal (15) dudit joint (11) de manière à constituer une continuité de ligne avec lesdits éléments tubulaires (12) reliés les unes avec les autres par ledit joint (11).

2. Plaquette selon la revendication 1, **caractérisée en ce que** lesdits bords latéraux (14) peuvent être insérés par le dessus à l'intérieur desdites rainures verticales (16).

3. Plaquette selon la revendication 2, **caractérisée en ce qu'**elle comprend des moyens de butée (17) capables de définir la position inférieure de fin de course par rapport au joint (11).

4. Plaquette selon la revendication 3, **caractérisée en ce que** lesdits moyens de butée (17) de fin de course comprennent au moins un ergot (18) réalisé en correspondance avec le profil supérieur (19) de la plaquette (10) et faisant face en direction de l'intérieur de ladite plaquette, capable de reposer sur la face supérieure (15b) du corps principal (15).

5. Plaquette selon la revendication 4, **caractérisée en ce que** ledit ergot (18) peut se coupler avec un creux correspondant sur la face supérieure (15b) du corps principal (15).

6. Plaquette selon la revendication 3, **caractérisée en ce que** lesdits moyens de butée (17) de fin de course sont définis par une interruption de borne inférieure dans au moins un des bords latéraux (14) de la plaquette (10) coopérant avec une interruption correspondante dans la rainure relativement verticale (16).

7. Plaquette selon la revendication 3, **caractérisée en ce que** lesdits moyens de butée de fin de course (17) sont définis par au moins un bord inférieur faisant saillie du corps principal (15) sur lequel le bord inférieur de la plaquette (10) peut reposer.

8. Plaquette selon la revendication 1, **caractérisée en ce qu'**elle présente une forme à angle droit.

9. Plaquette selon la revendication 1, **caractérisée en ce qu'**elle présente une forme sensiblement plate.
